# EUROPÄISCHE PATENTSCHRIFT

(11) **EP 4 067 199 B1**
(45) Veröffentlichungstag und Bekanntmachung des Hinweises auf die Patenterteilung: **30.04.2025**
(21) Anmeldenummer: 21165955.2
(22) Anmeldetag: 30.03.2021
(51) Int. Cl.: B61L 15/00

(54) **VERFAHREN ZUM EVAKUIEREN VON PASSAGIEREN AUS EINEM FAHRZEUG, ENDGERÄT UND FAHRZEUG FÜR DIESES VERFAHREN**
METHOD FOR EVACUATING PASSENGERS FROM A VEHICLE, TERMINAL AND VEHICLE FOR THIS METHOD
PROCÉDÉ D'ÉVACUATION DES PASSAGERS D'UN VÉHICULE, TERMINAL ET VÉHICULE POUR LEDIT PROCÉDÉ

(43) Veröffentlichungstag der Anmeldung: 05.10.2022
(73) Patentinhaber: Siemens Mobility GmbH, 81739 München (DE)
(72) Erfinder: Backhaus, Kai, 38106 Braunschweig (DE); Schossig, Frauke, 38118 Braunschweig (DE)
(74) Vertreter: Siemens Patent Attorneys

(56) Entgegenhaltungen:
- EP-A1- 3 121 092
- CA-C- 3 010 965
- CN-A- 107 745 727
- DE-A1- 102013 210 081
- KR-B1- 101 812 489

## Beschreibung

Die Erfindung betrifft ein Verfahren zum Evakuieren von Passagieren aus einem Fahrzeug, insbesondere spurgeführten Fahrzeug, bei dem eine durch ein Leit- und Sicherungssystem (im Folgenden kurz als LSS bezeichnet) für das Fahrzeug erzeugte, die Evakuierung betreffende Information über ein Kommunikationsgerät übermittelt wird. Außerdem betrifft die Erfindung ein Kommunikationsgerät zum Evakuieren von Passagieren aus einem Fahrzeug, insbesondere einem spurgeführten Fahrzeug. Weiterhin betrifft die Erfindung ein (insbesondere spurgeführtes) Fahrzeug. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Eine Evakuierung ist eine Situation, in der die Passagiere einen Zug oder ein anderes Fahrzeug verlassen müssen, während die Bedingungen für einen regulären Passagieraustausch nicht erfüllt werden. Treten beispielsweise während des U-Bahnbetriebs technische Defekte auf, oder kommt es zu einem Unfall, kann eine Evakuierung des jeweiligen Zuges oder mehrerer Züge nötig werden. Dies umfasst sowohl intrinsische Ursachen an Bord des Zuges (z.B. Entgleisung, Traktionsverlust), als auch extrinsische Ursachen, die von außen auf den Zug einwirken (z.B. Feuer im Tunnel, Kollision mit Hindernis). Während des regulären Fahrbetriebs mit einem Fahrer oder Begleiter an Bord des Zuges wird die Evakuierung vom Personal veranlasst, geleitet und überwacht. Diese Aussagen gelten aber sinngemäß beispielsweise auch für das autonome Fahren (von Zügen oder Automobilen), wobei hier einer Fernunterstützung der Evakuierung oder das Entsenden von Rettungskräften notwendig ist.

Bei Einsatz eines vollautomatischen Fahrbetriebs (im Folgenden auch UTO für Unattended Train Operation genannt), ohne Anwesenheit von Personal an Bord des Fahrzeugs, muss außerdem das Leit- und Sicherungssystem die Ursachen, die zu einer Evakuierung führen sollen, selbständig erkennen und entsprechende Maßnahmen veranlassen. Bestehende Systeme, die den vollautomatischen Fahrbetrieb (UTO) von zum Beispiel U-Bahnen ermöglichen, verfügen dazu über Evakuierungsfunktionen, die in Abhängigkeit der Ursache bestimmte Reaktionen auslösen. Diese Reaktionen umfassen die Türbedienung, Passagierwarnung, Information der Leitstelle, und die Entscheidung über das sofortige Anhalten auf der Strecke oder das Weiterfahren des Zuges bis zur nächsten Station. Als Beispiel kann das Produkt Trainguard MT R3 der Firma Siemens Mobility GmbH angeführt werden.

Die Evakuierungsfunktion von UTO-Systemen soll vorzugsweise:
- vermeiden, dass Passagiere vorzeitig die Gleise betreten,
- das Öffnen der Türen nur erlauben, wenn eine Evakuierung vorliegt und der Zug stillsteht,
- das Öffnen der Türen nur auf einer sicheren Seite erlauben,
- eine Schutzzone (Triggering Alarm Zone, TAZ) einrichten, die den Fahrbetrieb aller Züge innerhalb dieser Zone zum Schutz der Passagiere auf ihrem Rettungsweg vom Zug, z.B. zur nächsten Station oder zum Notausgang, und des Personals verhindert.

Die Leitstelle (Operation Control Center, im Folgenden kurz OCC genannt) veranlasst dann:
- das Stromfreischalten der Gleise, bzw. des Fahrdrahtes,
- die Evakuierungsmaßnahmen (z.B. Öffnen der Türen, Information der Passagiere),
- die Rettungsmaßnahmen bzw. das Aktivieren der Rettungskette,
- die Information der Rettungskräfte.

Wenn der Zug stillsteht und die Türen geöffnet sind, hat das OCC nur noch die Möglichkeit, akustisch auf die Passagiere über das sogenannte Passenger Information System (PIS) an Bord beispielsweise des Zuges einzuwirken (bei PKW gibt es seit 2019 verpflichtend in Deutschland das sogenannte E-Call System), oder ggf. Informationen auf Displays an Bord des Zuges anzeigen zu lassen. Dies gilt nur dann, wenn die Zugsysteme und -subsysteme nach dem zu der Evakuierung führenden Umstand (z.B. Unfall, technischer Defekt) noch funktionsfähig sind. Sind die Subsysteme an Bord des Zuges außer Betrieb, wie z.B. durch einen Stromausfall durch eine Entgleisung, ist keine Kommunikation mit den Passagieren im Tunnel möglich. Nur in seltenen Fällen befinden sich auch im Tunnel Lautsprecher, um die Evakuierung der Passagiere anzuleiten. Die Rettungskräfte oder das Personal haben nur Information über den Ort des zu evakuierenden Zuges, nicht jedoch über die Position und die genaue Anzahl der zu evakuierenden Personen. Dasselbe gilt beispielsweise auch für autonom fahrende Fahrzeuge in einem Straßentunnel.

Im Rahmen des Evakuierungsprozesses zwischen zwei Stationen kann für die Passagiere ein Betreten der Gleise bis zum Erreichen des nächsten Notausgangs nötig werden. Oftmals benötigt auch das Tätigwerden der Rettungskette einige Zeit, so dass zwischenzeitig Passagiere aus Eigeninitiative die Unfall- bzw. Gefahrenzone verlassen könnten, um zu Fuß die Strecke, insbesondere U-Bahntunnel, zur nächsten Station oder zum nächsten Notausgang zu durchqueren.

Eine Anleitung der Passagiere und Rettungskräfte in solchen U-Bahntunneln ist von der Leitzentrale nur eingeschränkt möglich. Viele Berichte verschiedener Medien zeugen in diesen Fällen von chaotischen Zuständen. Insbesondere beim begleiterlosen Fahrbetrieb (UTO) ohne Personal an Bord des Zuges, sind die Passagiere für eine bestimmte Zeit auf sich allein gestellt.

Befindet sich hingegen ein Fahrer oder ein Begleiter an Bord des Zuges, so kann dieser Maßnahmen zum Verlassen des Tunnels einleiten. Jedoch auch im Falle beispielsweise eines regulären U-Bahnbetriebs mit einem Fahrer bzw. Begleiter, wäre dieser mit der Information und Führung einer großen Anzahl von Personen in Anbetracht einer Gefahrensituation oder eines vorherigen Unfalls mit großer Wahrscheinlichkeit überfordert.

Der Einsatz von Kommunikationsmitteln zur Kommunikation zwischen dem OCC und den Passagieren oder Rettungskräften stellt eine Alternative dar, ist allerdings auf ein Passagierinformationssystem (im Folgenden kurz PIS genannt) an Bord des Zuges beschränkt, das über einen transparenten Datenkanal des Leit- und Sicherungssystem kommuniziert. Das PIS dient dabei zur visuellen und/oder akustischen Information der Passagiere an Bord des Zuges. Wenn der Zug stillsteht und die Türen geöffnet sind, hat der ATS-Operator (Automatic Train Supervision, ATS) nur noch die Möglichkeit akustisch auf die Passagiere an Bord oder in direkter Peripherie des Zuges einzuwirken, oder ggf. Informationen auf Displays an Bord des Zuges anzeigen zu lassen. Dies gilt außerdem nur dann, wenn die Zugsysteme und -subsysteme nach dem zu der Evakuierung führenden Umstand (z.B. Unfall, technischer Defekt) noch funktionsfähig sind. Sind die Systeme an Bord des Zuges außer Kraft gesetzt, wie z.B. durch einen Stromausfall im Falle einer Entgleisung, ist keine Kommunikation mit den Passagieren beispielsweise in einem Tunnel möglich.

Mit Beginn der Evakuierung und nach dem Anhalten des Zuges zwischen zwei Stationen werden je nach Schweregrad des Vorfalls Personal oder Rettungskräfte gesendet (zum Beispiel in einen Tunnel geschickt), um die Passagiere bei der Evakuierung anzuleiten. Rettungskräfte verwenden im Einsatz oftmals Handfunkgeräte zur Kommunikation untereinander und über kurze Wegstrecken. Beim Einsatz von Handfunkgeräten in Tunneln treten in Kurven und bei baulichen Hindernissen allerdings Probleme bei der Signalübertragung auf. Bedingt durch die bauliche Tiefe insbesondere von U-Bahntunneln ist hier auch keine zuverlässige Verbindung zu Mobilfunknetzen oder Satelliten möglich. Damit besteht derzeit keine zuverlässige Möglichkeit der Echtzeitkommunikation zwischen den Rettungskräften oder Passagieren und der Leitzentrale (OCC), aber auch zwischen den Rettungskräften untereinander.

Das Dokument KR 101 812 489 bezieht sich auf ein System und ein Verfahren zum Leiten der Evakuierung eines Fahrgasts in einem tiefen Tunnel für eine Hochgeschwindigkeitsbahn unter Verwendung von Ticketing-Anwendungsinformationen. Es wird geprüft, ob ein Passagier tatsächlich einsteigt, und Positionsinformationen werden durch Aktivierung von Wireless Fidelity (Wi-Fi) nach dem Sichern der eindeutigen Identifikation eines persönlichen Smartphones durch individuelle Ticketing-Anwendungsinformationen ermittelt. Das System umfasst einen Hochgeschwindigkeitsbahn-Steuerungsserver und ein Smartphone.

Die Aufgabe der Erfindung besteht darin, ein Verfahren zum Evakuieren von Passagieren aus einem Fahrzeug anzugeben, welches unabhängig von dem die Evakuierung auslösenden Ereignis zuverlässig eine Kommunikation zwischen den Passagieren, den Rettungskräften, einem Leit- und Sicherungssystem und der Leitzentrale ermöglicht und während der Evakuierung aufrecht erhält. Außerdem ist es Aufgabe der Erfindung, ein Kommunikationsgerät bzw. ein Fahrzeug anzugeben, welches zur Durchführung dieses Verfahrens ausgerüstet ist. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Verfahren) erfindungsgemäß dadurch gelöst, dass das Kommunikationsgerät als portables Kommunikationsgerät ausgeführt ist, welches für das Übermitteln der Information
- eine geräteeigene Energiequelle nutzt,
- rechnergestützt über eine erste Luftschnittstelle eine Kommunikationsverbindung zum Leit- und Sicherungssystem aufbaut, wobei die Kommunikationsverbindung als Kommunikationsinfrastruktur ein Funknetzwerk verwendet, das auch für eine Kommunikation zwischen dem insbesondere spurgeführten Fahrzeug und dem Leit- und Sicherungssystem verwendet wird.

Das Gerät kann beispielsweise von den Rettungskräften getragen und benutzt werden, und so die Kommunikation mit dem Leit- und Sicherungssystem sicherstellen und die Ortung des Trägers ermöglichen. Alternativ könnte eine bestimmte Anzahl (mindestens eines) dieser Geräte mit dem Evakuierungsbefehl automatisch oder nach einer Anweisung durch das LSS von den Passagieren an Bord des Zuges benutzt werden (hierzu im Folgenden noch mehr).

Das Kommunikationsgerät kann zum Beispiel bei fahrerlosen bzw. begleiterlosen U-Bahnen, Bahnen und autonomen Fahrzeugen zum Einsatz kommen. Prinzipiell ist auch ein Einsatz bei regulären U-Bahnen möglich, da ein einzelner Fahrer bzw. Begleiter bei einer Evakuierung mit der Leitung einer großen Anzahl an Passagieren überfordert wäre und so unterstützt werden kann.

Als LSS im Sinne der Erfindung soll ein System von technischen Komponenten verstanden werden, welches leittechnische und/oder sicherungstechnische Aufgaben im Betrieb des Fahrzeugs, der Linie (d.h. Streckenbetrieb) oder aller Fahrzeuge in einer Linie übernimmt. Als leittechnische Aufgaben werden Aufgaben verstanden, die über eine Leitzentrale den Verkehr des Fahrzeugs insbesondere in Bezug auf andere Fahrzeuge und oder einen Fahrplan regeln. Als sicherungstechnische Aufgaben werden Aufgaben verstanden, die die Sicherheit des Betriebs der Fahrzeuge sichern, um die Betriebssicherheit (und auch die Sicherheit für Zustände, die über den normalen Betrieb hinausgehen, wie Evakuierung usw.) zu gewährleisten.

Ein Leit- und Sicherungssystem kommt vorzugsweise im Zugbetrieb, insbesondere bei Nahverkehrszügen wie zum Beispiel einer U-Bahn zum Einsatz. Ein Leit- und Sicherungssystem ist allerdings auch für andere Fahrzeuge erforderlich, beispielsweise für den Einsatz von autonom fahrenden Bussen.

Erfindungsgemäß soll zwischen dem Kommunikationsgerät und dem LSS eine Luftschnittstelle verwendet werden. Dies bedeutet jedoch nicht, dass die Übertragung innerhalb der zu nutzenden Kommunikationsinfrastruktur ausschließlich durch die Luft erfolgt. Es ist auch möglich, dass die Luftschnittstelle beispielsweise zwischen einer Antenne des Kommunikationsgerätes und einer Antenne des LSS erfolgt, wobei die Kommunikationsinfrastruktur des LSS teilweise auch kabelgebunden ausgeführt ist. Insbesondere können beispielsweise auf einer U-Bahn-Strecke eine Anzahl von Sende- und Empfangsstationen montiert sein, die eine lückenlose drahtlose Kommunikation mit den Zügen ermöglichen, während die Sende- und Empfangsstationen selbst kabelgebunden in das LSS integriert sind.

Die Nutzung der Kommunikationsinfrastruktur für eine Kommunikation zwischen dem Kommunikationsgerät und dem LSS bringt den großen Vorteil mit sich, dass der hohe Grad an Übertragungszuverlässigkeit (und die damit verbundene hohe Verfügbarkeit), der bei einer Kommunikation des LSS mit dem Fahrzeug erreicht wird, auch für eine Kommunikation des Kommunikationsgerätes mit dem LSS im Falle einer Evakuierung gilt. Insbesondere ist sichergestellt, dass eine Kommunikation zwischen dem Kommunikationsgerät und dem LSS lückenlos auf der gesamten Strecke möglich ist, weil diese Voraussetzung auch für eine Kommunikation des LSS mit dem Fahrzeug, welches es zu evakuieren gilt, erforderlich ist.

Ein anderer Vorteil der Nutzung der Kommunikationsinfrastruktur zwischen dem Kommunikationsgerät und dem LSS liegt darin, dass diese Kommunikation nach bereits geltendem Standard auch vor dem Zugriff Dritter gesichert werden kann, und zwar in dem Maße, wie der verwendete Standard einen solchen Schutz vorsieht. Hierdurch kann beispielsweise verhindert werden, dass das Evakuierungssystem beispielsweise aufgrund eines Übertragungsfehlers oder eines vorsätzlichen Eingreifens (Cyberattacke, Security Threat aktiviert wird.

Möglich ist es zusätzlich, wenn das Kommunikationsgerät von einem Fahrzeuggerät des Fahrzeugs bereits vorhandene Informationen empfängt, dies ist unter Ausnutzung der Kommunikationsinfrastruktur ebenfalls möglich, da bereits viele Daten im Fahrzeuggerät vorliegen.

Die Erfindung:
- ermöglicht die akustische und visuelle Echtzeitkommunikation von Rettungskräften oder Passagieren mit der Leitzentrale (OCC) oder dem Passenger Information System (PIS) des Zuges.
- ermöglicht die automatisierte Weiterleitung von Informationen an den Benutzer (z.B. erfolgte Stromlosschaltung der Gleise / des Fahrdrahtes, erfolgtes Einrichten einer TAZ (Triggering Alarm Zone) d.h. einer Sperrzone für Zugbetrieb usw.) durch Einbindung in das bereits vorhandene Kommunikationssystem, welches als Teil des LSS aufzufassen ist.
- ermöglicht die Echtzeitortung des Trägers über den mindestens einen jeweils eingewählten RCS Access Point (AP) und die Anzeige der Position des Trägers über das LSS zum Beispiel im Operation Control Center (OCC).
- ermöglicht die Anzeige der Position des Trägers, der Träger weiterer, der Unfallstelle, der Rettungswege und der Gefahrenstellen (z.B. Strom auf Gleisen, weitere Spannungsquellen, fahrende Züge, Feuer) auf einer Moving Map (bauliche Architektur, Tunnelverlauf, Umgebung).
- ermöglicht die Aufnahme von Informationen über die Situation an der Unglücksstelle, z.B. über den Standort und Gesundheitszustand von entdeckten Personen oder Gefahren, und leitet diese weiter an das LSS und ggf. weitere Kommunikationsgeräte.
- ermöglicht das Markieren signifikanter Orte auf der Moving Map (mitlaufende Karte) z. B. durch das LSS. Das Markieren signifikanter Orte soll aber auch durch den Träger des Gerätes möglich sein. Diese Information wird dann an das LSS / OCC und die Träger weiterer Kommunikationsgeräte weitergegeben.
- ermöglicht das Anfordern von Hilfe durch Rettungskräfte, die ebenfalls das Gerät tragen, oder weiterer Rettungskräfte von außen.
- ermöglicht die Anzeige der Rettungswege bzw. des kürzesten Rettungsweges, ggf. mit einer Spur, auf der Moving Map (Navigationsfunktionalität).
- ermöglicht das Leiten von Passagierströmen, um eine optimale Entfernung der Menschenmassen vom Gefahrenort zu erreichen.
- nutzt insbesondere einen bereits implementierten Datenkanal des LSS und die damit verbundene Hardware. Die im Fahrzeug bereits vorhandenen Daten können ebenfalls genutzt werden.
- erweitert den Funktionsumfang beispielsweise eines Radio-based Metro Communication Systems.
- fordert nur einen geringen Entwicklungsaufwand durch die Möglichkeit der Nutzung bereits vorhandener IoT-Devices und Mobilfunkstandards in Verbindung mit dem RCS.

Das Kommunikationsgerät oder ein mit diesem ausgerüstetes Fahrzeug soll zumindest einige der folgenden Punkte gewährleisten (hierzu im Folgenden noch mehr):
- Sprechverbindung mit dem LSS (oder mit der Leitstelle bzw. Strecke) über das Funknetzwerk des RCS (Radio Communication System), oder alternativ über ein anderes Funknetzwerk (z.B. Mobilfunknetz, TETRA),
- Visueller Informationsaustausch zwischen dem Benutzer des Gerätes und dem LSS bzw. weiteren Kommunikationsgeräten über das Funknetzwerk des RCS und über ein Display, z.B. zur Information über
   - sich nähernde Züge (Triggering Alarm Zone Status),
   - die Stromfreischaltung der Gleise oder des Fahrdrahtes,
   - die Anzahl und den Standort der vermissten Personen,
   - den Standort des zu evakuierenden Zuges,
   - den Status von Schutztoren und des Lüftungssystems,
   - akute Gefahren,
- Ortung des Gerätes anhand der verwendeten RCS-Funkknoten oder Access Points,
- Nutzung der im ATC-System (Automatic Train Control) hinterlegten Position des zu evakuierenden Zuges, um die Evakuierung zu leiten,
- Möglichkeit RFID-Tags oder QR-Codes, die an den Tunnelwänden angebracht sind, einzulesen, um zusätzliche Informationen zur Evakuierung und zu möglichen Rettungswegen bereitzustellen,
- Lichtsignal / akustisches Signal zur Ortung bzw. Kenntlichmachung des Trägers,
- Akustische Signale an alle Fahrgäste.

Unter "rechnergestützt" oder "computerimplementiert" kann im Zusammenhang mit der Erfindung eine Implementierung des Verfahrens verstanden werden, bei dem mindestens ein Computer oder Prozessor mindestens einen Verfahrensschritt des Verfahrens ausführt.

Der Ausdruck "Rechner" oder "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können.

Unter einem "Prozessor" kann im Zusammenhang mit der Erfindung beispielsweise ein Wandler einen Sensor zur Erzeugung von Messsignalen oder eine elektronische Schaltung, verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen, etc. handeln.

Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Als "Programmmodule" sollen einzelne Funktionseinheiten verstanden werden, die einen erfindungsgemäßen Programmablauf von Verfahrensschritten ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Gemäß einer Ausgestaltung der Erfindung ist vorgesehen, dass mindestens eine Funktion des Kommunikationsgerätes nur verfügbar gemacht wird, wenn ein Evakuieren von Passagieren eingeleitet werden soll.

Durch diese Maßnahme kann sichergestellt werden, dass das Kommunikationsgerät nur zum Einsatz kommen kann, wenn ein Evakuieren von Passagieren notwendig ist. Insbesondere, wenn das Kommunikationsgerät durch Passagiere genutzt werden soll, könnten sonst Missverständnisse dahingehend ausgelöst werden, dass eine Evakuierung eingeleitet werden soll. Ein solches Missverständnis könnte wenigstens zu Irritationen bei den Passagieren, im schlimmsten Fall auch zu einer Panik führen.

Gemäß einer Ausgestaltung der Erfindung ist vorgesehen, dass als Funktion des Kommunikationsgerätes
- mindestens eine Benutzerschnittstelle und/oder
- die Funktion, portabel zu sein,
verfügbar gemacht wird.

Als Benutzerschnittstelle im Sinne der Erfindung soll eine Schnittstelle verstanden werden, die zu dem Benutzer des Kommunikationsgerätes eine Verbindung zum Übertragen von Informationen aufbaut. Diese können in erster Linie Informationen sein, die durch das Kommunikationsgerät an den Benutzer übertragen werden, beispielsweise Hinweise, wie die Evakuierung zu erfolgen hat. Es ist aber auch möglich, dass der Benutzer über die Benutzerschnittstelle Informationen an das LSS weitergibt. Beispielsweise könnten diese Informationen sich auf die Lage der Passagiere und des zu evakuierenden Fahrzeugs beziehen.

Benutzer des Kommunikationsgerätes können die Passagiere oder Personal (inklusive Rettungskräfte) sein, welches die Evakuierung unterstützen soll. Das Personal kann aus dem Fahrzeug stammen oder zum Zweck der Evakuierung des Fahrzeugs zum Fahrzeug entsendet werden. Mögliche Benutzerschnittstellen können demnach optisch (Bildschirm, Warnleuchte), akustisch (Sprechverbindung, Warnton) oder indirekt eine Funkschnittstelle zu anderen mobilen Geräten zur Kommunikation mit den Benutzern (hierzu im Folgenden noch mehr) sein.

Mit der Funktion, portabel zu sein, ist gemeint, dass das Gerät nur für den Fall einer notwendig werdenden Evakuierung portabel sein soll. Dies ist von besonderer Bedeutung, wenn das Gerät während des Betriebs im Fahrzeug vorhanden ist, und im Evakuierungsfall von den Passagieren verwendet werden soll. Dies bedeutet nämlich, dass das Gerät einerseits für die Passagiere erreichbar sein muss, jedoch auch, dass das Kommunikationsgerät im normalen Betrieb vor einer unbefugten Nutzung geschützt werden muss.

Es gibt verschiedene Möglichkeiten, die Funktion, portabel zu sein, nur für den Fall einer Evakuierung zur Verfügung zu stellen.

Beispielsweise könnte das Kommunikationsgerät mit einer lösbaren Arretierung im Fahrzeug befestigt sein, wobei die Arretierung nur gelöst wird, wenn ein Evakuierungsfall eingeleitet wird. Im Normalbetrieb könnte somit das Kommunikationsgerät nicht aus der Arretierung entfernt werden. Eine andere Möglichkeit besteht darin, dass das Gerät ähnlich wie Auslöser eines Feueralarms hinter Glas sichtbar aufbewahrt wird. Im Evakuierungsfall müsste dann das Glas zerbrochen werden.

Alternativ ist es möglich, dass das Gerät durch Personal zur Verfügung gestellt wird. Dies kann bedeuten, dass das Personal das Gerät im Evakuierungsfall auch nutzt oder dass das Kommunikationsgerät einem Passagier durch das Personal ausgehändigt wird.

Gemäß einer Ausgestaltung der Erfindung ist vorgesehen, dass das Kommunikationsgerät eine zweite Schnittstelle für mindestens eine weitere Kommunikationsverbindung über einen Kommunikationskanal, der nicht für eine Kommunikation zwischen dem insbesondere spurgeführten Fahrzeug und dem Leitsystem vorgesehen ist, anbietet.

Der Aufbau einer weiteren Kommunikationsverbindung ist sinnvoll, wenn das Kommunikationsgerät entweder Informationen an andere Kommunikationsgeräte weitergeben soll (beispielsweise über Mobilfunk, WLAN oder Bluetooth). Hierbei kann es sich beispielsweise um individuelle Kommunikationsgeräte handeln, welche durch die Passagiere mitgeführt werden (ist im Folgenden von individuellen Kommunikationsgeräten die Rede, so sind hiermit nicht die Kommunikationsgeräte zu verstehen, die über die erste Luftschnittstelle zur Kommunikation mit dem LSS verfügen, letztere werden weiterhin als Kommunikationsgeräte bezeichnet). Individuelle Kommunikationsgeräte sind beispielsweise Mobilfunkgeräte wie Smartphones oder Mobiltelefone der Passagiere, hierzu im Folgenden noch mehr). Insbesondere über Mobilfunk können nichtunterdrückbare Push-SMS-Nachrichten an alle Mobilfunkgeräte erzeugt werden, ohne individuelle Verbindungen aufzubauen, wie z.B. bei Bluetooth oder WLAN.

Alternativ ermöglichen auch Verfahren, wie z.B. Cell-Broadcast, das Kontaktieren aller Mobilfunkgeräte in Reichweite mit verschiedenen Alarmmeldungen und Schweregraden (beispielsweise EU-Alert in der EU / Emergency Alert System in den USA) Diverse europäische Länder haben bereits nationale Systeme etabliert (z.B. Niederlande, Rumänien, Litauen, Griechenland, Italien, UK).

Eine weitere Kommunikationsverbindung über die zweite Schnittstelle kann jedoch auch aufgebaut werden, damit das Kommunikationsgerät zusätzliche Informationen erhält. Beispielsweise kann an der Strecke eines Fahrzeugs eine zusätzliche Infrastruktur (also nicht die Kommunikationsinfrastruktur des LSS) installiert sein, die zur Übertragung von Informationen geeignet ist. Diese kann beispielsweise aus über Funk einlesbaren RFID-Tags oder optisch einlesbaren Barcodes bestehen, die eine Information über den aktuellen Ort enthalten.

Gemäß einer Ausgestaltung der Erfindung ist vorgesehen, dass das Kommunikationsgerät über die weitere Kommunikationsverbindung mit individuellen Kommunikationsgeräten der Passagiere kommuniziert.

Der Aufbau einer weiteren Kommunikationsverbindung zu individuellen Kommunikationsgeräten der Passagiere hat den Vorteil, dass die Evakuierung betreffende Informationen auf einfache Weise unter den Passagieren verteilt werden können. Dies hat Vorteile beispielsweise dann, wenn eine konventionelle Kommunikation (Sichtkontakt, Sprache) von Passagieren untereinander bzw. zwischen den Rettungskräften und Passagieren eingeschränkt ist. Dies kann beispielsweise bei unzureichenden Lichtverhältnissen oder bei Lärmentwicklung bzw. Rauchentwicklung der Fall sein (insbesondere beispielsweise in einem U-Bahn-Tunnel). Auch kann es sein, dass sich Passagiere auf freier Strecke bereits zu weit voneinander entfernt haben, um eine konventionelle Kommunikation untereinander zu ermöglichen.

Weiterhin ist es möglich, dass Passagiere über die individuellen Kommunikationsverbindungen (d. h. die Kommunikationsverbindungen, die zwischen den Kommunikationsgeräten der Passagiere und dem Kommunikationsgerät hergestellt werden) Informationen betreffend die Evakuierung an das LSS oder an Rettungskräfte weitergeben können. Diese Informationen können beispielsweise den Gesundheitszustand der Passagiere, deren Anzahl, oder Informationen über die Vorkommnisse, die die Evakuierung ausgelöst haben, beinhalten. Diese Informationen, z.B. die Anzahl und der Ort der Passagiere, können auch indirekt weitergegeben bzw. ermittelt werden, über die Funkverbindungen der individuellen Kommunikationsgeräte mit dem LSS oder dem Kommunikationsgerät. Vorteilhaft kann über die Anzahl der eingewählten Mobilfunkverbindungen die Anzahl und der Aufenthaltsort der zu evakuierenden Passagiere geschätzt werden.

Die Kommunikation zwischen den individuellen Kommunikationsgeräten und dem Kommunikationsgerät kann beispielsweise aufgebaut werden, indem zur Kommunikation über die weitere Kommunikationsverbindung eine Evakuierungs-Applikation (kurz App) auf den individuellen Kommunikationsgeräten genutzt wird.

Die genannte Applikation kann beispielsweise in eine Applikation integriert sein, welche Fahrgäste typischerweise bei der Nutzung öffentlicher Verkehrsmittel benutzen (beispielsweise eine Ticket-App oder eine Fahrplan-App). Eine andere Möglichkeit besteht darin, dass die Applikation im Evakuierungsfall zum Download angeboten wird. Dies kann beispielsweise durch das Kommunikationsgerät gewährleistet werden.

Eine andere Möglichkeit besteht darin, dass die Evakuierungs-Applikation durch das Kommunikationsgerät den individuellen Kommunikationsgeräten unter Nutzung einer Internetadresse angeboten wird. Dies hat den Vorteil, dass die überwiegende Mehrheit von Kommunikationsgeräten, die durch die Passagiere mitgeführt werden, bereits über einen Internet Browser verfügt, sodass keine Applikation für eine Kommunikation mit dem Kommunikationsgerät auf die individuellen Kommunikationsgeräte heruntergeladen werden muss. Im Evakuierungsfall, kann daher sofort eine Kommunikation über eine erzeugte Internetverbindung hergestellt werden. Dieses Vorgehen ist an sich bekannt, beispielsweise, um an öffentlichen Orten oder Hotels eine WLAN-Verbindung für das individuelle Kommunikationsgerät aufzubauen.

Gemäß einer Ausgestaltung der Erfindung ist vorgesehen, dass das Kommunikationsgerät die weitere Kommunikationsverbindung zu weiteren gleichartigen Kommunikationsgeräten aufbaut. Bei den weiteren gleichartigen Kommunikationsgeräten handelt es sich somit um Kommunikationsgeräte, welche ebenfalls über ihre erste Luftschnittstelle mit dem LSS kommunizieren können. Mit anderen Worten sind hiermit also die erfindungsgemäß speziell zur Evakuierung vorgesehenen Kommunikationsgeräte gemeint. Dies bedeutet, dass mehrere dieser Kommunikationsgeräte bei der Evakuierung zum Einsatz kommen können, um diese zu koordinieren.

Damit dies lückenlos möglich ist, und die Aktionen der Kommunikationsgeräte nicht zu widersprüchlichen Ergebnissen führen, können die Kommunikationsgeräte untereinander kommunizieren. Auf diese Weise ist auch sichergestellt, dass Informationen bezüglich der Evakuierung durch alle Kommunikationsgeräte geteilt werden. Stellt beispielsweise ein Passagier über ein Kommunikationsgerät eine Information über die Ursache der Evakuierung zur Verfügung, die Konsequenzen für die Evakuierung hat (beispielsweise Meldung eines Brandes), so kann diese Information auch in denjenigen Kommunikationsgeräten berücksichtigt werden, die nicht mit dem betreffenden Passagier verbunden sind.

Gemäß einer Ausgestaltung der Erfindung ist vorgesehen, dass als Information mindestens eine der folgenden Nachrichten übertragen werden:
- sich nähernde Züge, insbesondere aktive Triggering Alarm Zones (TAZ),
- die Stromfreischaltung der Gleise oder des Fahrdrahtes,
- die Anzahl von vermissten Personen,
- der Standort des zu evakuierenden Zuges,
- der Status eines Lüftungssystems,
- der Status weiterer Fremdsysteme, also von Systemen, die nicht Teil des Fahrzeugs oder der durch die Strecke gebildeten Infrastruktur für das Fahrzeug sind (z.B. Flutschutztore, Plattform Screen Doors, Gap Filler usw.),
- der Status des Zuges (z.B. Türen, Antriebsmotoren, Stromversorgung usw.),
- die Position und/oder Richtung zum nächsten Bahnhof und/oder Notausgang,
- akute Gefahren, insbesondere Brände und/oder Überflutungen und/oder Terrorgefahren.

Hierbei handelt es sich um wertvolle Informationen, welche einzeln oder zu mehreren in Gruppen ausgewertet werden können, um eine Evakuierung zu koordinieren und insbesondere die Sicherheit der Passagiere und Rettungskräfte während der Evakuierung zu erhöhen.

Gemäß einer Ausgestaltung der Erfindung ist vorgesehen, dass das Kommunikationsgerät Schallsignale und/oder Lichtsignale ausgibt, die die Passagiere und Rettungskräft bei der Ortung des Kommunikationsgerätes unterstützen.

Um die Schallsignale und/oder Lichtsignale zu erzeugen, ist das Kommunikationsgerät erfindungsgemäß mit geeigneten Signalgebern ausgestattet. Die Möglichkeit, Signale auszugeben, erhöht die Aussichten auf die erfolgreiche Durchführung einer Evakuierung. Es ist nämlich davon auszugehen, dass die Passagiere im Evakuierungsfall nicht über das Vorhandensein und die Funktion des Kommunikationsgerätes Bescheid wissen. Der Signalgeber erzeugt bei den Passagieren Aufmerksamkeit, so dass das Evakuierungsverfahren aufgrund der durch das Kommunikationsgerät zur Verfügung gestellten Informationen durchgeführt werden kann.

Gemäß einer Ausgestaltung der Erfindung ist vorgesehen, dass das Kommunikationsgerät unter Nutzung der Kommunikationsinfrastruktur geortet wird.

Die Ortung des Kommunikationsgerätes lässt indirekt einen Rückschluss auf die Position der zu evakuierenden Passagiere zu, da davon ausgegangen werden kann, dass die Passagiere oder eine die Passagiere begleitende Rettungskraft das Kommunikationsgerät mit sich führt. Auch lässt sich hierdurch feststellen, ob das Kommunikationsgerät ordnungsgemäß die Evakuierung begleitet. Wenn es sich über einen längeren Zeitraum nicht bewegt, kann davon ausgegangen werden, dass es nicht durch eine der an der Evakuierung beteiligten Personen mitgeführt wird.

Durch die Verbindung des Kommunikationsgerätes mit den entlang der Strecke in Abständen angebrachten Antennen, sogenannten Access Points (Im Folgenden auch kurz AP), ist eine Ortung des Kommunikationsgerätes möglich, indem die Position des oder der jeweils verbundenen Access Points genutzt wird. Eine entsprechende Ortungsfunktion könnte nun über die Verbindung des Kommunikationsgerätes zu den einzelnen Access Points den ungefähren Standort des Gerätes ermitteln.

Es ist technisch auch eine genauere Ortung möglich. Hierzu dienen zum Beispiel verschiedene praxiserprobte Methoden der Funkortung (z.B. Time Difference of Arrival, Enhanced Observed Time Difference), die eine genauere Bestimmung des Gerätestandortes ermöglichen, als dies durch eine rein ortsgebundene Zuweisung der verbundenen APs möglich wäre. Eine Verbesserung der Ortung kann außerdem durch die Nutzung eines Beschleunigungssensors erzielt werden, der die Beschleunigungen des Gerätes in 6 Freiheitsgraden misst und eine anschließende Integration auf die Position des Gerätes durchführt, analog zur Funktion eines Trägheitsnavigationsgerätes. Diese Technik wird auch in Smartphones und Smartwatches bereits genutzt und ist daher an sich bekannt.

Die genannte Aufgabe wird alternativ mit dem eingangs angegebenen Anspruchsgegenstand (Kommunikationsgerät) erfindungsgemäß auch dadurch gelöst, dass das Kommunikationsgerät als portables Kommunikationsgerät ausgeführt ist, welches für das Übermitteln der Information
- eine geräteeigene Energiequelle aufweist,
- eine erste Luftschnittstelle aufweist, wobei die erste Luftschnittstellen zur Verwendung eines Kommunikationsstandards für ein Funknetzwerk eingerichtet ist, das auch für eine Kommunikation zwischen dem Fahrzeug und einem Leit- und Sicherungssystem für das Fahrzeug genutzt wird.

Gemäß einer Ausgestaltung der Erfindung ist vorgesehen, dass das Kommunikationsgerät eingerichtet ist, ein Verfahren der vorstehend näher beschriebenen Art durchzuführen.

Die genannte Aufgabe wird alternativ mit dem eingangs angegebenen Anspruchsgegenstand (insbesondere spurgeführtes Fahrzeug) erfindungsgemäß auch dadurch gelöst, dass dieses ein Kommunikationsgerät gemäß dem vorstehend erläuterten Verfahren aufweist, welches mit einer öffenbaren Verschlussvorrichtung in dem insbesondere spurgeführten Fahrzeug gehalten ist.

Mit dem Kommunikationsgerät bzw. dem Fahrzeug lassen sich die Vorteile erreichen, die im Zusammenhang mit dem obenstehend näher beschriebenen Verfahren bereits erläutert wurden. Das zum erfindungsgemäßen Verfahren Ausgeführte gilt entsprechend auch für die erfindungsgemäßen Vorrichtungen.

Gemäß einer Ausgestaltung der Erfindung ist vorgesehen, dass das insbesondere spurgeführte Fahrzeug mehrere Kommunikationsgeräte aufweist, die dazu eingerichtet sind, untereinander zu kommunizieren.

Die Vorteile einer Nutzung von mehreren Kommunikationsgeräten sind bereits vorstehend erläutert worden. Insbesondere ist eine koordinierte Evakuierung von Passagieren möglich, wenn hierbei mehrere Kommunikationsgeräte genutzt werden sollen. Beispielsweise können bei einem spurgeführten Fahrzeug mehrere Kommunikationsgeräte dahingehend vorgesehen werden, dass sich bei der Nutzung eines Verbandes von mehreren Fahrzeugen (beispielsweise Waggons) in jedem der Fahrzeuge ein solches Kommunikationsgerät befindet. Damit lassen sich in jedem der Fahrzeuge befindliche Passagiere durch mindestens eines der Kommunikationsgeräte erreichen.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise eine Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Merkmalen der Erfindung kombinierbar. Die Erfindung ist durch die Ansprüche definiert.

Es zeigen:
Figur 1 ein Ausführungsbeispiel einer Zug-Infrastruktur mit einer Strecke, einem Zug und einem LSS für den Zug, in der das erfindungsgemäße Kommunikationsgerät zum Einsatz kommen kann, mit ihren Wirkzusammenhängen schematisch,
Figur 2 ein Ausführungsbeispiel einer Computer-Infrastruktur des Kommunikationsgerätes gemäß Figur 1 als Blockschaltbild, wobei die einzelnen Funktionseinheiten Programmmodule enthalten, die jeweils in einem oder mehreren Prozessoren ablaufen können, und die Schnittstellen demgemäß softwaretechnisch oder hardwaretechnisch ausgeführt sein können,
Figur 3 ein Ausführungsbeispiel des erfindungsgemäßen Verfahrens als Flussdiagramm, wobei die einzelnen Verfahrensschritte einzeln oder in Gruppen durch Programmmodule verwirklicht sein können und wobei die Funktionseinheiten und Schnittstellen gemäß Figur 2 beispielhaft angedeutet sind.

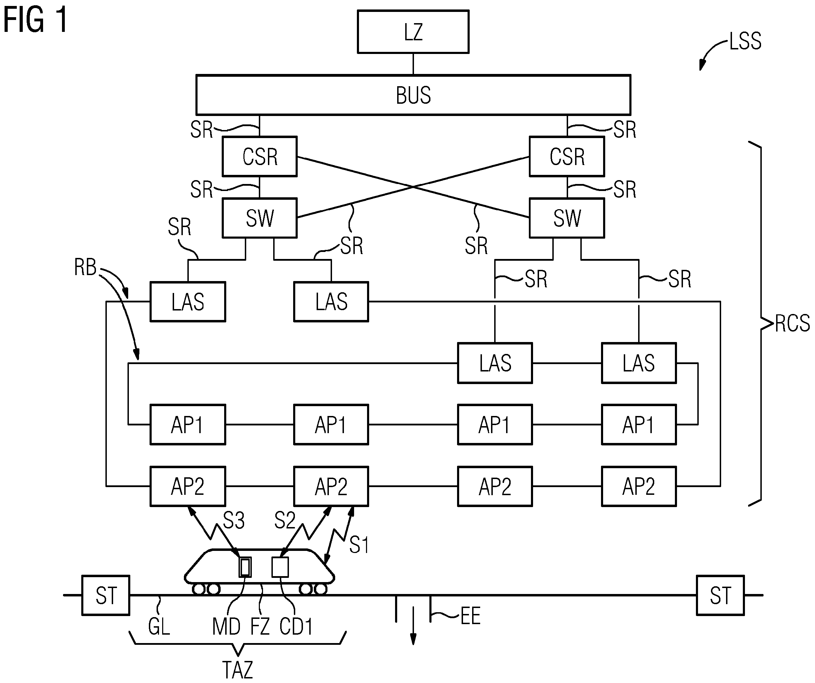

Figur 1 zeigt ein Leit- und Sicherungssystem LSS, welches für ein Fahrzeug FZ, welches zwischen zwei Bahnhöfen ST auf einem Gleis GL unterwegs ist, im Wirkzusammenhang steht. Konkret besteht das Leit- und Sicherungssystem LSS aus einer Leitzentrale LZ und einem Radio Communication System RCS, also dem System einer Infrastruktur, die eine Funkkommunikation zwischen der Leitzentrale LZ und dem Fahrzeug FZ zulässt. Diese Kommunikation erfolgt über eine erste Schnittstelle S1.

Das RCS stellt somit eine Kommunikationsinfrastruktur zur Verfügung, die eine technisch zuverlässige Übertragung ermöglicht und zu diesem Zweck Redundanz aufbaut. Der Informationsfluss erfolgt über ein Bussystem BUS und über redundante Schnittstellen SR, wobei die Funktionskomponenten, wie im Folgenden näher erläutert wird, ebenfalls redundant angeordnet sind. So sind zwei Central System Router CSR (zentrale Systemrouter) vorgesehen, die über ebenfalls zwei Network Switches SW (Netzwerkschalter) die Information an einen Radio Backbone RB (Funkinfrastruktur) weitergeben. Der Radio Backbone RB verfügt ebenfalls über zwei Netzwerkringe (Loops), welche jeweils redundant über Loop Access Switches LAS (Zugangsschalter) mit den Network Switches SW verbunden sind.

Als Radio Backbone RB wird ein redundantes System von Access Points (Zugangspunkten) für Funkschnittstellen bezeichnet, welche in Abschnitten an der Strecke GL derart angeordnet sind, dass eine lückenlose Kommunikation des Fahrzeugs FZ mit wenigstens einem der Access Points AP1, AP2 - vorzugsweise immer gleichzeitig mit mehreren dieser Access Points AP1, AP2 - möglich ist. Hierdurch kann sichergestellt werden, dass eine über das Radio Communication System RCS bestehende Verbindung zwischen dem Fahrzeug FZ und der Leitzentrale LZ nicht abbricht wobei die Verbindung über eine erste Schnittstelle S1 über Funk sichergestellt ist. Die redundante Anordnung jeweils zweier paralleler Access Points AP1, AP2 in unabhängigen Netzwerkringen des Radio Backbone RB führt dazu, dass der gesamte Kommunikationsweg von der Leitzentrale LZ zum Fahrzeug FZ redundant aufgebaut ist. Die beschriebene (Netzwerk)Architektur ermöglicht einen sicheren und zuverlässigen fahrerlosen Betrieb des Fahrzeugs FZ.

Im Fahrzeug FZ ist außerdem ein Kommunikationsgerät CD1 untergebracht, welches im Bedarfsfall eine Evakuierung unterstützt und hierfür über eine zweite Schnittstelle S2 mit den Access Points AP1, AP2 über Funk kommuniziert. Außerdem ist exemplarisch ein individuelles Kommunikationsgerät MD, beispielsweise ein Smartphone, dargestellt, welches durch einen Fahrgast (dieser ist nicht dargestellt) im Fahrzeug FZ mitgeführt wird. Das individuelle Kommunikationsgerät MD nutzt über eine dritte Schnittstelle S3 nicht näher dargestellte Access Points mindestens eines Mobilfunknetzes (Z.B. LTE oder 5G).

Während des Betriebs sind i.d.R. mehrere Access Points AP1, AP2 (bis zu vier physische Datenverbindungen) mit einem Zug verbunden, so dass die Redundanz der Funkverbindung gewährleistet ist. Diese Redundanz wird durch die Kommunikation über unterschiedliche Frequenzen (z.B. 2,4 GHz und 5,8 GHz) in der Übertragung identischer Daten erweitert, um die Wahrscheinlichkeit zu verringern, dass alle verwendeten Signalpfade gleich verzerrt werden. Diese Maßnahmen führen zu einem hochgradig verfügbaren Funknetzwerk, dass für die Erfindung als Basis dienen kann.

Im Bedarfsfall, d. h., wenn eine Evakuierung aus dem Fahrzeug FZ erforderlich ist, wird das Kommunikationsgerät CD1 aktiviert und kommuniziert dann über eine zweite Schnittstelle S2 mit den Access Points AP1, AP2. Dies ermöglicht eine Kommunikation der Passagiere im Fahrzeug FZ mit der Leitzentrale LZ oder mit nicht dargestellten Rettungskräften, die ebenfalls mit den erfindungsgemäßen Kommunikationsgeräten ausgestattet sein können. Hierbei kann die hohe Zuverlässigkeit und Sicherheit der Netzwerkarchitektur, die für eine Kommunikation zwischen der Leitzentrale LZ und dem Fahrzeug FZ genutzt wird, auch im Evakuierungsfall für das Kommunikationsgerät CD1 Verwendung finden, sodass eine lückenlose und fehlerfreie Kommunikation ermöglicht wird. Diese Kommunikation dient beispielsweise einer Bedarfsermittlung für die Evakuierung (Informationen fließen vom Kommunikationsgerät CD1 zur Leitzentrale LZ oder Rettungskräften) oder zur Steuerung der Evakuierung (Informationen fließen von der Leitzentrale LZ oder Rettungskräften zum Kommunikationsgerät CD1). Beispielsweise kann ermittelt werden, in welche Richtung der Strecke GL die Passagiere evakuiert werden sollen (dargestellt in Figur 1 sind die Bahnhöfe ST sowie ein Notausgang EE). In dem Beispiel gemäß Figur 1 werden die Passagiere zu dem nächstgelegenen Bahnhof ST geführt, wobei zu diesem Zweck eine Schutzzone TAZ (Triggering Alarm Zone) eingerichtet wird, in der der Zugverkehr vollständig eingestellt wird und die Gleise oder der Fahrdraht stromlos geschaltet werden.

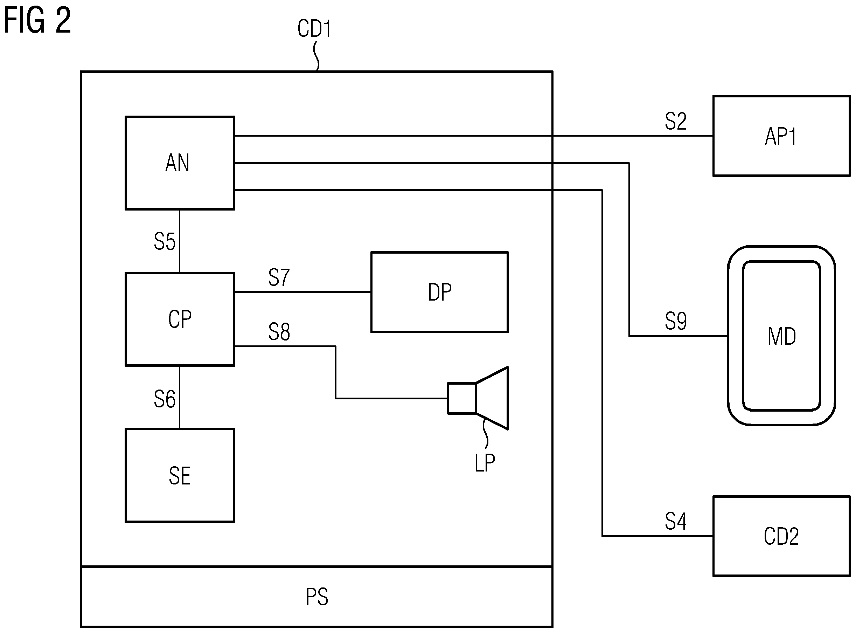

In Figur 2 ist der Aufbau des Kommunikationsgeräts als Blockschaltbild dargestellt. Das Kommunikationsgerät CD1 weist eine autarke Energieversorgung PS auf, sodass dieses im Evakuierungsfall unabhängig von einer externen Energieversorgung betrieben werden kann. In dem Kommunikationsgerät CD1 arbeitet ein Computer CP, der über eine fünfte Schnittstelle S5 mit einer Antenneneinrichtung AN verbunden ist. Über die Antenneneinrichtung AN kann das Kommunikationsgerät kommunizieren, und zwar über die die Luftschnittstelle bildende zweite Schnittstelle S2 mit einem Access Point, beispielsweise AP2 des RCS (siehe Figur 1), mit einem individuellen Kommunikationsgerät MD über eine neunte Schnittstelle S9, wobei dieses beispielsweise einem Passagier gehört, mit einem weiteren Kommunikationsgerät CD2 über eine vierte Schnittstelle S4, wobei dieses weitere Kommunikationsgerät CD2 genauso aufgebaut ist wie das Kommunikationsgerät CD1 und von einer Rettungskraft genutzt werden könnte, die vor ihrer Entsendung mit dem Kommunikationsgerät CD2 ausgestattet wurde.

Über eine sechste Schnittstelle S6 ist der Computer mit einer Speichereinrichtung SE verbunden, sodass Daten und Programme in der Speichereinrichtung SE abgespeichert werden können. Insbesondere können auch Apps in der Speichereinrichtung SE abgespeichert sein, die über die dritte Schnittstelle S3 den individuellen Kommunikationsgeräten MD zum Download angeboten werden können.

Außerdem kann der Computer CP über eine siebte Schnittstelle S7 mit einer Anzeige DP kommunizieren, über die Informationen zur Evakuierung ausgegeben werden können. Es gibt auch einen Lautsprecher LP, der über eine achte Schnittstelle S8 mit dem Computer CP verbunden ist und Evakuierungssignale sowie gesprochene Informationen übertragen kann.

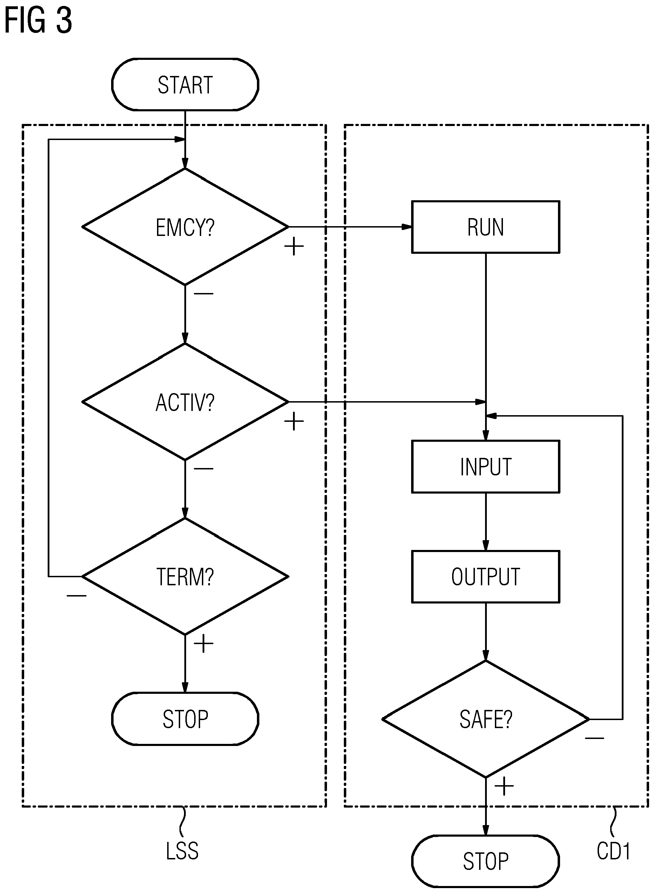

Der Figur 3 lässt sich schematisch und beispielhaft ein Verfahrensablauf entnehmen, wobei das Zusammenwirken des Leit- und Sicherungssystems LSS und des Kommunikationsgeräts CD1 durch strichpunktierte Linien angedeutet ist.

Nach dem Start des Verfahrens wird mittels des Leit- und Sicherungssystems LSS ein Fahrzeug gemäß Figur 1 während seines Betriebs gesteuert. Dabei erfolgt wiederholt ein Abfrageschritt EMCY?, ob ein Störfall vorliegt. Ist dies nicht der Fall, erfolgt wiederholt ein weiterer Abfrageschritt ACTIV?, ob das Kommunikationsgerät CD1 aktiviert wurde. Ist dies nicht der Fall, wird in einem weiteren Abfrageschritt TERM? geprüft, ob der Betrieb des Fahrzeugs beendet wurde. Ist dies der Fall, wird das Verfahren gestoppt. Ist dies nicht der Fall, werden die Abfrageschritte, die vorstehend beschrieben wurden, wiederholt.

Führt der Abfrageschritt EMCY? zu einem positiven Ergebnis, so wird das Kommunikationsgerät in einem Aktivierungsschritt RUN aktiviert. Sollte das Kommunikationsgerät CD1 bereits aktiviert sein (zum Beispiel durch eine Inbetriebnahme durch einen Fahrgast oder weil das betreffende Kommunikationsgerät außerhalb des Zuges zur Nutzung durch Rettungskräfte vorgesehen und von diesen aktiviert wurde), führt die Abfrage ACTIV? zu einem positiven Ergebnis und das Verfahren, welches in dem Kommunikationsgerät CD1 abläuft, wird ohne einen Aktivierungsschritt RUN gestartet.

Das Verfahren zum Betrieb des Kommunikationsgeräts CD1 ist in Figur 3 stark vereinfacht dargestellt. Es besteht im Wesentlichen aus Eingabeschritten INPUT, wobei das Kommunikationsgerät CD1 mit Daten gefüttert wird, die von einem weiteren Kommunikationsgerät CD2, von individuellen Kommunikationsgeräten MD oder von der Leitzentrale LZ bzw. Rettungskräften (diese könnten beispielsweise das weitere Kommunikationsgerät CD2 nutzen) stammen können (vgl. auch Figur 2). Ebenso können die Rettungskräfte das Kommunikationsgerät CD1 nutzen. Das Verfahren kann auch durchgeführt werden, ohne dass das Fahrzeug mit Kommunikationsgeräten ausgestattet ist (alle Kommunikationsgeräte werden durch die Rettungskräfte genutzt).

Außerdem gibt es Ausgabeschritte OUTPUT an die besagten Geräte oder an Ausgabegeräte, wie eine Anzeige DP oder ein Lautsprecher LP (vgl. Figur 2). Hierdurch ist eine Kommunikation zwischen den Beteiligten der Evakuierung sichergestellt.

Eingabeschritten INPUT und Ausgabeschritten OUTPUT folgt in regelmäßigen Abständen eine Abfrage SAFE?, ob die Störung beseitigt wurde bzw. die Evakuierung beendet wurde. Ist dies der Fall, wird das Verfahren gestoppt. Ist dies nicht der Fall, erfolgen weitere Eingabeschritte INPUT und Ausgabeschritte OUTPUT zur Begleitung des Evakuierungsvorgangs.

### Bezugszeichenliste

- FZ: Fahrzeug
- GL: Gleis
- ST: Bahnhof
- EE: Notausgang
- TAZ: Schutzzone (Triggering Alarm Zone)
- LZ: Leitzentrale
- BUS: BUS-System
- CSR: Central System Router
- SW: Network Switch (Netzwerkweiche)
- LAS: Loop Access Switch (Zugangsweiche)
- RCS: Radio Communication System
- RB: Radio Backbone
- AP1 ... AP2: Access Points (Zugangspunkte)
- S1 ... S8: Schnittstelle
- SR: redundante Schnittstelle

- LSS: Leit- und Sicherungssystem
- CD1 ... CD2: Kommunikationsgerät
- PS: Energiequelle
- CP: Computer
- SE: Speichereinrichtung
- AN: Antenneneinrichtung
- DP: Anzeige
- LP: Lautsprecher
- MD: Individuelles Kommunikationsgerät

- EMCY?: Abfrageschritt Störung
- ACTIV?: Abfrageschritt Kommunikationsgerät aktiv
- TERM?: Abfrageschritt Betriebsende
- RUN: Aktivierungsschritt Kommunikationsgerät
- INPUT: Eingabeschritt für Kommunikationsgerät
- OUTPUT: Ausgabeschritt von Kommunikationsgerät
- SAFE?: Abfrageschritt Störung beseitigt

## Patentansprüche

1. Verfahren zum Evakuieren von Passagieren aus einem Fahrzeug (FZ), insbesondere spurgeführten Fahrzeug, bei dem eine durch ein Leit- und Sicherungssystem (LSS) für das Fahrzeug (FZ) erzeugte, die Evakuierung betreffende Information über ein Kommunikationsgerät (CD1, CD2) übermittelt wird, wobei das Kommunikationsgerät (CD1, CD2) als portables Kommunikationsgerät ausgeführt ist, welches für das Übermitteln der Information
• eine geräteeigene Energiequelle nutzt,
• über eine erste Luftschnittstelle eine Kommunikationsverbindung zum Leit- und Sicherungssystem (LSS) aufbaut,
**dadurch gekennzeichnet, dass** die Kommunikationsverbindung als Kommunikationsinfrastruktur ein Funknetzwerk verwendet, das auch für eine Kommunikation zwischen dem Fahrzeug (FZ) und dem Leit- und Sicherungssystem (LSS) verwendet wird.

2. Verfahren nach Anspruch 1
**dadurch gekennzeichnet,**
**dass** mindestens eine Funktion des Kommunikationsgerätes (CD1, CD2) nur verfügbar gemacht wird, wenn ein Evakuieren von Passagieren eingeleitet werden soll.

3. Verfahren nach Anspruch 2,
**dadurch gekennzeichnet,**
**dass** als Funktion des Kommunikationsgerätes (CD1, CD2)
• mindestens eine Benutzerschnittstelle und/oder
• die Funktion, portabel zu sein,
verfügbar gemacht wird.

4. Verfahren nach einem der voranstehenden Ansprüche,
**dadurch gekennzeichnet,**
**dass** das Kommunikationsgerät (CD1, CD2) eine zweite Schnittstelle (S9) für mindestens eine weitere Kommunikationsverbindung über einen Kommunikationskanal, der nicht für eine Kommunikation zwischen dem Fahrzeug (FZ) und dem Leitsystem (LSS) vorgesehen ist, anbietet.

5. Verfahren nach Anspruch 4,
**dadurch gekennzeichnet,**
**dass** das Kommunikationsgerät (CD1, CD2) über die weitere Kommunikationsverbindung mit individuellen Kommunikationsgeräten (MD) der Passagiere kommuniziert.

6. Verfahren nach Anspruch 4,
**dadurch gekennzeichnet,**
**dass** das Kommunikationsgerät (CD1, CD2) die weitere Kommunikationsverbindung zu weiteren gleichartigen Kommunikationsgeräten aufbaut.

7. Verfahren nach einem der voranstehenden Ansprüche,
**dadurch gekennzeichnet,**
**dass** als Information mindestens eine der folgenden Nachrichten übertragen werden:
• sich nähernde Züge, insbesondere Triggering Alarm Zones (TAZ)
• die Stromfreischaltung der Gleise oder des Fahrdrahtes (GL),
• die Anzahl von vermissten Personen,
• der Standort des zu evakuierenden Zuges,
• der Status eines Lüftungssystems,
• der Status von Fremdsysteme, insbesondere Flutschutztore, Bahnsteigtürensysteme, Überbrückungsmechanismen für den Bahnsteigspalt,
• der Status des Zuges, insbesondere Türen, Antriebsmotoren, Stromversorgung,
• Die Position und/oder Richtung zum nächsten Bahnhof (ST) und/oder Notausgang (EE),
• akute Gefahren, insbesondere Brände und/oder Überflutungen und/oder Terrorgefahren.

8. Verfahren nach einem der voranstehenden Ansprüche,
**dadurch gekennzeichnet,**
**dass** das Kommunikationsgerät (CD1, CD2) Schallsignale und/oder Lichtsignale ausgibt, die die Passagiere bei der Ortung des Kommunikationsgerätes (CD1, CD2) unterstützen.

9. Verfahren nach einem der voranstehenden Ansprüche,
**dadurch gekennzeichnet,**
**dass** das Kommunikationsgerät (CD1, CD2) unter Nutzung der Kommunikationsinfrastruktur geortet wird.

10. Kommunikationsgerät (CD1, CD2) zum Evakuieren von Passagieren aus einem Fahrzeug (FZ), insbesondere einem spurgeführten Fahrzeug, wobei das Kommunikationsgerät (CD1, CD2) als portables Kommunikationsgerät ausführt ist, welches für das Übermitteln der Information
• eine geräteeigene Energiequelle aufweist,
• eine erste Luftschnittstelle aufweist,
**dadurch gekennzeichnet, dass** die erste Luftschnittstelle zur Verwendung eines Kommunikationsstandards für ein Funknetzwerk eingerichtet ist, das auch für eine Kommunikation zwischen dem Fahrzeug (FZ) und einem Leit- und Sicherungssystem (LSS) für das Fahrzeug (FZ) genutzt wird.

11. Kommunikationsgerät (CD1, CD2) nach Anspruch 10,
**dadurch gekennzeichnet,**
**dass** das Kommunikationsgerät (CD1, CD2) eingerichtet ist, ein Verfahren der vorstehenden Ansprüche 1 - 9 durchzuführen

12. Fahrzeug (FZ)
**dadurch gekennzeichnet,**
**dass** dieses ein Kommunikationsgerät (CD1, CD2) gemäß einem der vorstehenden Ansprüche 10 - 11 aufweist, welches mit einer öffenbaren Verschlussvorrichtung in dem Fahrzeug (FZ) gehalten ist.

13. Fahrzeug nach Anspruch 12,
**dadurch gekennzeichnet,**
**dass** das Fahrzeug (FZ) mehrere Kommunikationsgeräte (CD1, CD2) aufweist, die dazu eingerichtet sind, untereinander zu kommunizieren.

14. Computerprogrammprodukt mit Programmbefehlen zur Durchführung des Verfahrens nach einem der Ansprüche 1 - 9.

15. Bereitstellungsvorrichtung für das Computerprogrammprodukt nach dem letzten voranstehenden Anspruch, wobei die
Bereitstellungsvorrichtung das Computerprogrammprodukt speichert und/oder bereitstellt.

## Claims

1. Method for evacuating passengers from a vehicle (FZ), in particular rail-guided vehicle, in which an item of information, which is generated by a control and safety system (LSS) for the vehicle (FZ) and relates to the evacuation, is transmitted via a communication device (CD1, CD2),
wherein
the communication device (CD1, CD2) is designed as a portable communication device which, for the transmission of the information,
• uses an energy source that is separate for the device,
• establishes a communication connection to the control and safety system (LSS) via a first air interface,
**characterised in that** the communication connection uses a radio network, which is also used for communication between the vehicle (FZ) and the control and safety system (LSS), as communication infrastructure.

2. Method according to claim 1,
**characterised in that**
at least one function of the communication device (CD1, CD2) is only made available when an evacuation of passengers is to be initiated.

3. Method according to claim 2,
**characterised in that**
• at least one user interface and/or
• the portability function
is made available as a function of the communication device (CD1, CD2).

4. Method according to one of the preceding claims,
**characterised in that**
the communication device (CD1, CD2) offers a second interface (S9) for at least one further communication connection via a communication channel, which is not intended for communication between the vehicle (FZ) and the control system (LSS).

5. Method according to claim 4,
**characterised in that**
the communication device (CD1, CD2) communicates with individual communication devices (MD) of the passengers via the further communication connection.

6. Method according to claim 4,
**characterised in that**
the communication device (CD1, CD2) establishes the further communication connection with further communication devices of the same type.

7. Method according to one of the preceding claims,
**characterised in that**
at least one of the following messages is transferred as the information:
• approaching trains, in particular triggering alarm zones (TAZ),
• the power disconnection of the tracks or the contact wire (GL),
• the number of missing persons,
• the location of the vehicle to be evacuated,
• the status of a ventilation system,
• the status of external systems, in particular flood protection gates, platform screen door systems, bridging systems for the platform gap,
• the status of the train, in particular doors, drive motors, power supply,
• the position of and/or direction towards the next station (ST) and/or emergency exit (EE),
• acute hazards, in particular fires and/or floods and/or threats of terrorism.

8. Method according to one of the preceding claims,
**characterised in that**
the communication device (CD1, CD2) outputs sound signals and/or light signals, which support the passengers with locating the communication device (CD1, CD2).

9. Method according to one of the preceding claims,
**characterised in that**
the communication device (CD1, CD2) is located using the communication infrastructure.

10. Communication device (CD1, CD2) for evacuating passengers from a vehicle (FZ), in particular a rail-guided vehicle,
wherein
the communication device (CD1, CD2) is designed as a portable communication device which, for the transmission of the information,
• has an energy source that is separate for the device,
• has a first air interface,
**characterised in that** the first air interface is configured to use a communication standard for a radio network that is also used for communication between the vehicle (FZ) and a control and safety system (LSS) for the vehicle (FZ).

11. Communication device (CD1, CD2) according to claim 10,
**characterised in that**
the communication device (CD1, CD2) is configured to perform a method of the preceding claims 1 - 9.

12. Vehicle (FZ),
**characterised in that**
said vehicle has a communication device (CD1, CD2) according to one of the preceding claims 10 - 11, which is held in the vehicle (FZ) using an openable closure apparatus.

13. Vehicle according to claim 12,
**characterised in that**
the vehicle (FZ) has a plurality of communication devices (CD1, CD2), which are configured to communicate with one another.

14. Computer program product with program commands for performing the method according to one of claims 1 - 9.

15. Provision apparatus for the computer program product according to the last preceding claim, wherein the provision apparatus stores and/or provides the computer program product.

## Revendications

1. Procédé d'évacuation de passagers d'un véhicule (FZ), en particulier d'un véhicule guidé sur rail, dans lequel on transmet, par un appareil (CD1, CD2) de communication, de l'information concernant l'évacuation et produite par un système (LSS) de conduite et de sécurité du véhicule (FZ),
dans lequel
l'appareil (CD1, CD2) de communication est réalisé sous la forme d'un appareil de communication portable qui, pour la transmission d'information
• utilise une source d'énergie propre à l'appareil,
• établit, par l'intermédiaire d'une première interface radio, une liaison de communication avec le système (LSS) de conduite et de sécurité,
**caractérisé en ce que**
la liaison de communication utilise comme infrastructure de communication un réseau radio, qui est utilisé également pour une communication entre le véhicule (FZ) et le système (LSS) de conduite et de sécurité.

2. Procédé suivant la revendication 1,
**caractérisé**
**en ce qu'**au moins une fonction de l'appareil (CD1, CD2) de communication n'est rendue disponible, que s'il faut effectuer une évacuation de passagers.

3. Procédé suivant la revendication 2,
**caractérisé**
**en ce que** l'on rend disponible comme fonction de l'appareil (CD1, CD2) de communication,
• au moins une interface d'utilisateur et/ou
• la fonction, d'être portable.

4. Procédé suivant l'une des revendications précédentes,
**caractérisé**
**en ce que** l'appareil (CD1, CD2) de communication offre une deuxième interface (S9) pour au moins une autre liaison de communication par un canal de communication, qui n'est pas prévu pour une communication entre le véhicule (FZ) et le système (LSS) de conduite.

5. Procédé suivant la revendication 4,
**caractérisé**
**en ce que** l'appareil (CD1, CD2) de communication communique avec des appareils (MD) individuels de communication des passagers par l'autre liaison de communication.

6. Procédé suivant la revendication 4,
**caractérisé**
**en ce que**
l'appareil (CD1, CD2) de communication établit l'autre liaison de communication vers d'autres appareils de communication de même type.

7. Procédé suivant l'une des revendications précédentes,
**caractérisé**
**en ce que** l'on transmet comme information au moins l'un des messages suivants :
• des trains qui se rapprochent, en particulier des triggering alarm zones (TAZ)
• la déconnexion du courant des voies ou du fil (GL) de contact,
• le nombre de personnes manquantes,
• l'emplacement du train à évacuer,
• l'état d'un système d'aération,
• l'état de systèmes extérieurs, en particulier de portes de protection vis-à-vis d'une affluence, de systèmes de portes d'accès, de mécanismes de pontage de l'intervalle avec la voie d'accès,
• l'état du train, notamment des portes, des moteurs d'entraînement, de l'alimentation en cours,
• la position et/ou le sens vers la gare (ST) la plus proche et/ou la sortie (EE) d'urgence,
• des dangers aigus, en particulier des incendies et/ou des inondations et/ou de terrorisme.

8. Procédé suivant l'une des revendications précédentes,
**caractérisé**
**en ce que** l'appareil (CD1, CD2) de communication émet des signaux sonores et/ou des signaux lumineux, qui assistent les passagers dans la localisation de l'appareil (CD1, CD2) de communication.

9. Procédé suivant l'une des revendications précédentes,
**caractérisé**
**en ce qu'**on localise l'appareil (CD1, CD2) de localisation en utilisant l'infrastructure de communication.

10. Appareil (CD1, CD2) de communication pour l'évacuation de passagers d'un véhicule (FZ), en particulier d'un véhicule guidé sur rail, dans lequel l'appareil (CD1, CD2) de communication est réalisé en appareil de communication portable, qui pour la transmission de l'information
• a une source d'énergie propre à l'appareil,
• a une première interface radio,
**caractérisé en ce que**
la première interface radio est agencée pour l'utilisation d'une norme de communication pour un réseau radio, qui est utilisé également pour une communication entre le véhicule (FZ) et un système (LSS) de conduite et de sécurité du véhicule (FZ).

11. Appareil (CD1, CD2) de communication suivant la revendication 10,
**caractérisé**
**en ce que** l'appareil (CD1, CD2) de communication est agencé pour effectuer un procédé suivant des revendications 1 à 9 précédentes.

12. Véhicule (FZ)
**caractérisé**
**en ce qu'**il a un appareil (CD1, CD2) de communication suivant l'une des revendications 10 à 11 précédentes, qui est tenu dans le véhicule (FZ) par un dispositif de fermeture pouvant être ouvert.

13. Véhicule suivant la revendication 12,
**caractérisé**
**en ce que** le véhicule (FZ) a plusieurs appareils (CD1, CD2) de communication, qui sont agencés pour communiquer entre eux.

14. Produit de programme d'ordinateur ayant des instructions de programme pour exécuter le procédé suivant l'une des revendications 1 à 9.

15. Dispositif de mise à disposition du produit de programme d'ordinateur suivant la dernière revendication précédente, dans lequel le dispositif de mise à disposition met en mémoire et/ou met à disposition le produit de programme d'ordinateur.
